# FASCICULE DE BREVET EUROPEEN

(11) **EP 3 585 676 B1**
(45) Date de publication et mention de la délivrance du brevet: **04.08.2021**
(21) Numéro de dépôt: 18705173.5
(22) Date de dépôt: 22.01.2018
(51) Int. Cl.: B62D 25/08, B62D 21/15

(54) **DISPOSITIF DE RENFORT DE FIXATION DE POUTRE CENTRALE POUR CHÂSSIS ARRIÉRE DE VÉHICULE**
VERSTÄRKUNGSVORRICHTUNG ZUR BEFESTIGUNG EINES MITTELTRÄGERS FÜR DAS HINTERE CHASSIS EINES FAHRZEUGS
REINFORCEMENT DEVICE FOR SECURING A CENTRAL BEAM FOR A REAR CHASSIS OF A VEHICLE

(30) Priorité: 27.02.2017 FR 1751552
(43) Date de publication de la demande: 01.01.2020
(73) Titulaire: PSA Automobiles SA, 78300 Poissy (FR)
(72) Inventeur: BENANE, Said, 94550 Chevilly Larue (FR)
(86) Numéro de dépôt international: PCT/FR2018/050148
(87) Numéro de publication internationale: WO 2018/154202

(56) Documents cités:
- US-A- 5 507 522
- US-A1- 2008 252 104
- US-A1- 2010 301 637

## Description

L'invention se situe dans le domaine des châssis arrières de véhicule et concerne plus particulièrement un dispositif associé à la poutre centrale de tels châssis.

Le châssis arrière d'un véhicule est une structure inférieure qui en supporte la partie arrière. Ce dernier se compose généralement de deux poutres latérales s'étendant selon la direction longitudinale du véhicule et reliées entre elles par au moins deux traverses réparties selon la direction longitudinale du véhicule de sorte à distinguer une traverse avant et une traverse arrière. L'espace du véhicule défini et supporté par les traverses et les poutres latérales correspond généralement au coffre, mais peut également correspondre à la benne d'un véhicule de type pick-up comme décrit dans le document EP 0723904. Le châssis arrière est généralement fermé en partie inférieure par un plancher inférieur.

Lors d'un choc à l'arrière du véhicule, le châssis arrière et en particulier la traverse arrière vont être amenés à se déformer en direction de l'avant. Cette déformation va entrainer une intrusion dans l'habitacle d'éléments qui risquent de blesser des passagers assis à l'arrière. De manière à limiter cette intrusion, un dispositif d'absorption de choc arrière peut être présent au niveau du châssis arrière et comprend de manière connue une poutre centrale reliant la traverse avant et la traverse arrière. Cette poutre centrale absorbe l'énergie du choc grâce à une déformation longitudinale.

Un tel dispositif est présenté par exemple par le document US 6206461 et consiste en une poutre centrale dont l'extrémité avant s'évase progressivement et dont l'extrémité arrière s'élargit de manière étagée. La configuration de cette poutre centrale lui assure de bons appuis contre chacune des traverses. Le document US2010/301637 décrit une structure arrière de véhicule comprenant deux poutres latérales longitudinales entre lesquelles s'étendent deux traverses, une tige s'étendant entre chacune de ces traverses.

Il a été observé que lors d'un choc arrière, cette poutre centrale n'est pas correctement maintenue en position selon toutes les directions d'effort, et notamment selon la direction verticale alors que les efforts verticaux sont les plus conséquents. La poutre centrale risque alors de perdre ses appuis contre les traverses du châssis arrière, et de perdre ainsi en efficacité d'absorption de l'énergie du choc arrière, voire de s'introduire dans l'habitacle.

Il serait donc intéressant de trouver une solution pour maintenir la position de la poutre centrale relative aux traverses du châssis arrière.

L'invention a pour objectif de répondre à au moins un des problèmes soulevés dans l'art antérieur en proposant un dispositif de renfort de fixation de la poutre centrale d'un châssis arrière sur la traverse avant.

A cet effet l'invention a pour objet un véhicule comprenant un châssis arrière présentant deux poutres latérales orientées selon la direction longitudinale du véhicule et reliées entre elles par au moins deux traverses de sorte à distinguer une traverse avant et une traverse arrière reliées entre elles par une poutre centrale parallèle aux deux poutres latérales, ladite poutre centrale comprenant une face supérieure et une face inférieure, le véhicule étant remarquable en ce qu'il comprend en outre un dispositif de renfort de fixation de la poutre centrale comprenant un renfort inférieur fixé à la traverse avant et qui s'étend sur au moins une partie de la face inférieure de ladite poutre centrale.

Comme on l'aura compris à la lecture de la définition qui vient d'en être donnée, l'invention se propose de mettre en place un renfort au niveau de l'extrémité avant de la poutre centrale permettant de stabiliser son appui contre la traverse avant lors de sa déformation résultant de l'absorption de l'énergie d'un choc arrière du véhicule. Il a en effet été observé qu'au niveau de l'extrémité avant de la poutre centrale une partie importante des efforts étaient dirigés vers le bas. Le renfort s'étendant au moins le long de la face inférieure de la poutre centrale, ce dernier agit comme un support sur lequel la poutre centrale pourra prendre appui lors d'un choc arrière, diminuant voir évitant ses mouvements verticaux vers le bas.

Le dispositif de renfort de fixation de l'invention présente également l'avantage de pouvoir être adapté facilement à tous types de poutres centrales et tous types de traverse avant, et présente donc une implantation facile dans tous types de véhicule.

De préférence, la poutre centrale comprenant une extrémité avant et une extrémité arrière selon la direction longitudinale du véhicule, le renfort de fixation relie la traverse avant à l'extrémité avant de la poutre centrale, de sorte à e que ledit renfort inférieur soit fixé à la fois à ladite traverse avant et à l'extrémité avant de ladite poutre centrale. En effet, selon une mise en oeuvre préférée de l'invention, le renfort inférieur fait office d'interface de fixation reliant la traverse avant à l'extrémité avant de la poutre centrale de préférence par leurs faces inférieures.

Selon un mode de réalisation préféré de l'invention, la poutre centrale comprenant une extrémité avant et une extrémité arrière selon la direction longitudinale du véhicule, le véhicule est remarquable en ce que la poutre centrale est dimensionnée pour que son extrémité avant soit espacée de la traverse avant. Cette configuration permet au renfort de fixation de participer à l'absorption du choc comme cela sera vu en détail plus loin.

Préférentiellement, le renfort inférieur comprend un corps creux. De préférence encore, le renfort inférieur comprend un profilé en forme de U ouvert vers le haut. Les efforts verticaux que produit la poutre centrale étant plus conséquent en direction du sol, le renfort inférieur de l'invention est ainsi adapté pour les absorber par déformation.

Selon un mode de réalisation préféré de l'invention, le renfort inférieur comprend deux parties agencées l'une à la suite de l'autre selon la direction longitudinale du véhicule, de sorte à distinguer une partie de fixation à la traverse avant et une partie de support de la poutre centrale, la partie de fixation à la traverse étant disposée en avant de la partie de support de la poutre centrale ; et la partie de support de la poutre centrale est formée par un corps creux, de préférence ledit corps creux comprend au moins un ajourage sur une de ses faces.

De préférence, la partie de support est fixée à la poutre centrale. De préférence encore, la partie de support comprenant une face supérieure et une face inférieure, ainsi que deux faces latérales en regard chacune d'un côté du véhicule, au moins une desdites faces latérales et/ou inférieur et/ou supérieure de la partie de support comprend au moins un ajourage.

La mise en place d'ajourages sur les faces latérales de la partie de support augmente sa capacité de déformation lors d'un effort subi, et permet d'ajuster la rigidité des parois pour absorber correctement les efforts en provenance la poutre centrale. D'un autre côté, la mise en place d'ajourages sur une ou plusieurs faces de la partie de support lui permet se déformer selon la direction longitudinale du véhicule. Lorsque la partie de support est fixée à la poutre centrale, cette dernière va augmenter la raideur de la poutre centrale et il est alors intéressant de nuancer cette raideur par l'ajout d'ajourages. Le dispositif de renfort de l'invention présente ainsi une triple fonction de support et/ou de fixation de la poutre centrale, d'absorption des efforts verticaux de cette dernière et d'absorption de l'énergie du choc arrière.

Selon un mode de réalisation préféré de l'invention, la poutre centrale comprenant une face avant et une face arrière, et le renfort inférieur comprenant deux parties agencées l'une à la suite de l'autre selon la direction longitudinale du véhicule, de sorte à distinguer une partie de fixation à la traverse avant et une partie de support de la poutre centrale, la partie de fixation à la traverse étant disposée en avant de la partie de support de la poutre centrale, le véhicule est remarquable en ce que :
- la traverse avant présente une hauteur inférieure à celle de la poutre centrale ; et
- la partie de fixation à la traverse avant et la partie de support de la poutre centrale présentent des hauteurs différentes ; et en ce que
- la partie de fixation à la traverse avant est disposée de sorte à être au moins en partie en regard avec une partie de la face avant de la poutre centrale ;
de préférence, la partie de fixation à la traverse avant est plus haute que la partie de support de la poutre centrale.

Ainsi le renfort inférieur présente par sa partie de fixation une fonction de butée d'appui pour la face avant l'extrémité avant de la poutre centrale et permet avantageusement d'augmenter la surface d'appui de la face avant de la poutre centrale sans augmenter toute la surface de la traverse avant. Cette configuration est particulièrement avantageuse lorsque le véhicule présente une poutre centrale de hauteur supérieure à la traverse avant et donc supérieure aux poutres centrales de l'art antérieur, on voit donc comment l'invention permet une meilleure absorption de l'énergie du choc arrière.

De préférence, la poutre centrale étant dimensionnée pour que son extrémité avant soit espacée de la traverse avant, le véhiculé est remarquable en ce que le renfort inférieur est configuré pour que la partie de fixation à la traverse avant qui est disposée de sorte à être au moins en partie en regard avec une partie de la face avant de la poutre centrale soit placée en contact avec ladite partie avant de la poutre centrale.

De préférence, la partie de fixation s'étend en arrière au-delà de la traverse avant de sorte à ce que la poutre centrale soit maintenue à l'écart de la traverse avant. De préférence, la partie de fixation comprend au moins une nervure sur au moins une de ses faces latérales, de préférence encore la ou les nervures sont verticales. Ainsi la partie de fixation est apte à se déformer longitudinalement par appui de la poutre centrale et participe à l'absorption de l'énergie du choc arrière. Après un écrasement suffisant, la poutre centrale se retrouvera au contact de la traverse en avant et pourra alors se déformer à son tour pour continuer l'absorption de l'énergie du choc arrière. La ou les nervures aident à la déformation de la partie de fixation tout en lui apportant plus de raideur en fin de choc.

De préférence, la partie de fixation a un profil en équerre de sorte à ce que ses faces latérales présentent un profil de triangle rectangle. Ainsi le profil de la partie de fixation lui permet d'assurer efficacement son rôle tout en minimisant l'ajout de poids dans le véhicule. Lorsque la partie de fixation a un profil en équerre, la ou les nervures présentent préférentiellement un angle avec l'horizontal compris entre 30 et 60 degrés, de préférence encore un angle de 45 degrés.

Selon un mode de réalisation de l'invention, la partie de fixation et la partie de support sont formées d'une seule pièce.

Selon un autre mode de réalisation de l'invention la partie de fixation et la partie de support sont deux pièces distinctes fixées entre elles. De préférence, la partie de support et la partie de fixation sont fixées entre elles par l'intermédiaire d'au moins une patte de fixation.

Ainsi, l'invention permet d'adapter facilement chaque partie du renfort inférieur à différents véhicules qui comprendraient par exemple une poutre centrale ou une traverse avant commune, sans avoir à modifier tout le renfort inférieur. Ce mode de réalisation permet également d'implanter plus facilement le renfort inférieur dans un véhicule.

Selon un autre mode de réalisation particulier de l'invention, le dispositif de renfort de fixation selon l'invention comprend un renfort inférieur et un renfort supérieur et va donc s'étendre sur au moins une partie de la face inférieure et de la face supérieure de la poutre centrale. Ainsi, le dispositif de l'invention maintient la poutre centrale à la manière d'un étau, permettant un meilleur maintien vertical de la poutre centrale.

De préférence, le dispositif de renfort de fixation comprend un renfort supérieur fixé à la traverse avant et qui s'étend sur au moins une partie de la face supérieure de la poutre centrale. De préférence, le renfort supérieur est fixé à la poutre centrale. De préférence encore, le renfort supérieur comprend une partie centrale s'étendant le long de la face supérieure de la poutre centrale et au moins une aile s'étendant le long d'une des faces latérales de la poutre centrale.

Ainsi l'invention permet avantageusement de limiter, voire d'empêcher les mouvements verticaux et horizontaux de la poutre centrale, améliorant la stabilité de l'appui de l'extrémité avant de la poutre centrale sur la traverse avant.

De préférence, le renfort supérieur est fixé à la traverse avant par l'intermédiaire d'au moins une patte de fixation. De préférence, l'extrémité avant de la poutre centrale est espacée de la traverse avant.

Ainsi l'invention ajoute un dispositif d'absorption supplémentaire de l'énergie du choc arrière par la déformation d'une ou de plusieurs pattes de fixation du renfort supérieur selon la direction longitudinale du véhicule. En effet lors d'un choc arrière, la poutre centrale va effectuer un effort sur la ou les pattes de fixation du renfort supérieur qui vont alors se déformer en s'écrasant sur elles-mêmes de par l'espace qui est présent entre la poutre centrale et la traverse avant. Là encore, après un écrasement suffisant, la poutre centrale se retrouvera au contact de la traverse en avant et pourra alors se déformer à son tour pour continuer l'absorption de l'énergie du choc arrière. Il est à noter que la partie centrale et le ou les plis latéraux du renfort supérieur ne sont pas affectés par la déformation de la ou des pattes de fixation et peuvent alors continuer d'assurer une stabilité verticale et horizontale de l'extrémité avant de la poutre centrale.

De préférence, la traverse avant comprenant une face supérieure et une face inférieure, ainsi qu'une face avant et une face arrière en regard respectivement de l'avant et de l'arrière du véhicule, le renfort supérieur comprend au moins trois pattes de fixation dont au moins une patte est fixée à la face supérieure de la traverse et au moins deux pattes sont fixées à la face latérale de cette dernière qui est en regard de l'arrière du véhicule. La mise en place d'un trépied de fixation ajoute de la stabilité à l'ensemble formé par les pattes de fixation, et améliore leur capacité d'absorption de l'énergie du choc arrière.

L'invention concerne également un dispositif de renfort de fixation de poutre centrale de châssis arrière tel que défini plus haut.

L'invention sera bien comprise et d'autres aspects et avantages apparaîtront clairement à la lecture de la description qui suit, donnée à titre d'exemple en référence aux planches de dessins annexées sur lesquelles :
- La figure 1 représente une vue arrière supérieure d'un véhicule selon l'invention comprenant une poutre centrale associée à un renfort.
- La figure 2 représenté une vue en perspective d'un châssis arrière de véhicule comprenant une poutre centrale et un renfort selon l'invention.
- La figure 3 représente une vue en perspective d'un renfort selon l'invention associé à une poutre centrale.

Dans la description qui suit, le terme « comprendre » est synonyme de « inclure » et n'est pas limitatif en ce qu'il autorise la présence d'autres éléments dans le véhicule ou le dispositif de renfort de fixation auquel il se rapporte. Il est entendu que le terme « comprendre » inclut les termes « consister en ». Les termes « avant » et « arrière » ainsi que les directions « longitudinale » et « transversale » s'entendront par rapport à l'orientation générale du véhicule. Les termes « bas » et « inférieur » indiqueront une proximité avec le sol plus importante que respectivement les termes « haut » et « supérieur ». Sur les différentes figures, les mêmes références désignent des éléments identiques ou similaires.

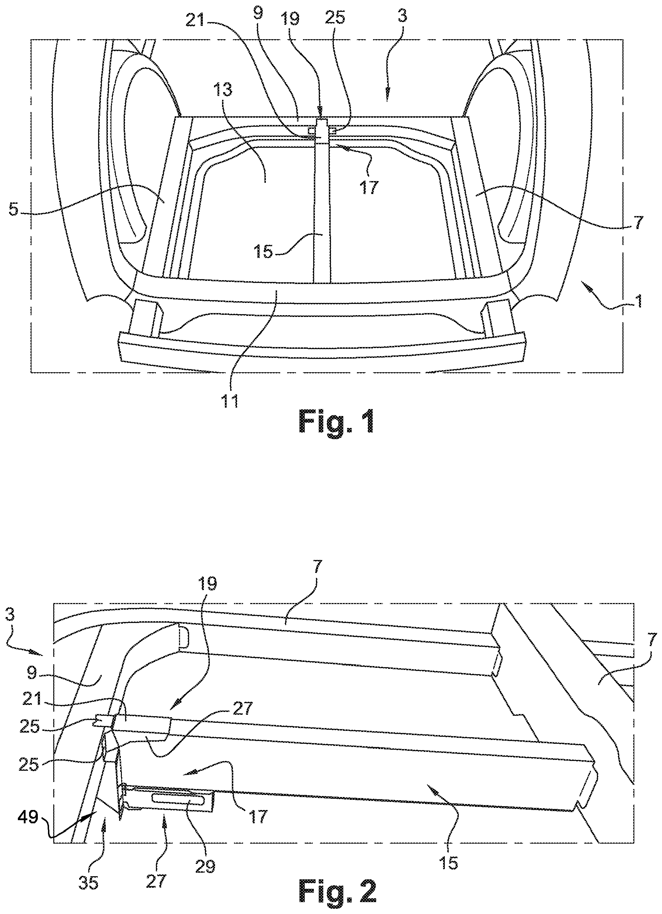

On se référera en premier lieu à la figure 1, qui représente une vue arrière supérieure d'un véhicule 1 selon l'invention, et qui montre un châssis arrière 3 comprenant deux poutres latérales (5, 7) orientées selon la direction longitudinale du véhicule 1. Ces deux poutres (5,7) sont reliées entre elles par deux traverses (9, 11) dont une est située proche des extrémités arrières des deux poutres latérales (5, 7), ci-après dénommée traverse arrière 11, et l'autre est placée plus en avant, ci-après dénommée traverse avant 9. Chaque traverse présente une face supérieure, une face inférieure ainsi qu'une face avant et une face arrière en regard respectivement de l'avant et de l'arrière du véhicule. Dans l'exemple représenté, l'espace défini et supporté par les deux poutres latérales (5,7) et les deux traverses (9, 11) correspond au coffre du véhicule 1. Cet espace est fermé en partie inférieure par un plancher inférieur 13.

Une poutre centrale 15 est disposée entre les deux poutres latérales (5, 7) et s'étend parallèlement à elles. La poutre centrale 15 comprend une extrémité avant reliée à la traverse 9 avant et une extrémité arrière reliée à la traverse 11 arrière. En outre, la poutre centrale 15 comprend une face supérieure et une face inférieure (non visible) selon un axe vertical ainsi que deux faces latérales en regard chacune d'un côté du véhicule 1.

Le véhicule 1 est remarquable en ce qu'il comprend en outre un dispositif de renfort de fixation 17 de la poutre centrale 15 qui est fixé la traverse 9 avant, et s'étend le long au moins de la face inférieure de la poutre centrale 15. Ainsi le dispositif de renfort de fixation 17 sert d'appui vertical pour la poutre centrale 15. La poutre centrale peut être simplement en contact avec le dispositif de renfort de fixation ou bien fixée dessus. De préférence, la poutre centrale comprenant une extrémité avant et une extrémité arrière selon la direction longitudinale du véhicule, le dispositif de renfort de fixation 17 relie la traverse avant et l'extrémité avant de la poutre centrale 15.

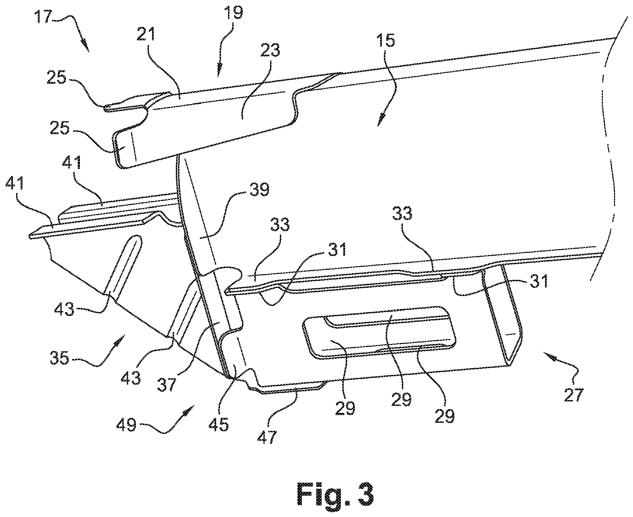

On se tournera à présent vers les figures 2 et 3 qui présentent sous différents angles de vue le dispositif de renfort de fixation 17 de l'invention associé à la traverse avant 9 et à la poutre centrale 15.

Selon un mode de réalisation de l'invention, le dispositif de renfort de fixation 17 comprend un renfort inférieur 49 fixé à la face inférieure de la traverse 9 avant et s'étendant le long d'au moins une partie de la face inférieure de la poutre centrale 15. Le renfort inférieur comprend deux parties agencées l'une derrière l'autre, que sont une partie de fixation 35 à la traverse avant disposée en avant d'une partie de support 27 de la poutre centrale. De préférence la partie de support 27 est fixée à la poutre centrale 15.

De préférence, le renfort inférieur 49 comprend un corps creux. De préférence encore, le renfort inférieur comprend un profilé en U ouvert vers le haut. Ainsi le renfort inférieur 49 et ses différentes parties (27, 35) comprennent deux faces latérales en regard chacun d'un côté du véhicule 1, ainsi qu'une face inférieure et optionnellement une face supérieure.

La partie de support 27 comprend de préférence au moins un ajourage 29 sur au moins une de ses faces latérales et/ou sa face inférieure et/ou supérieure. Ce ou ces ajourages 29 permettent à cette partie 27 d'être plus déformable lors d'efforts subis. Il est à noter que lorsque la partie de support 27 du renfort inférieur 49 est fixée à la poutre centrale 15, cette partie va se déformer longitudinalement à la manière de la poutre centrale 15. En outre la partie de support 27 ajoute de la raideur localement à la déformation longitudinale de la poutre centrale 15. Cette raideur permet de mieux contrôler la déformation de la poutre centrale 15 et participe également à l'absorption de l'énergie du choc arrière.

Lorsque la partie de support 27 est fixée à la poutre centrale 15, cette fixation se fait par tout moyen. De préférence et comme il est représenté en figure 3, la partie de support 27 est fixée à la poutre centrale 15 par l'intermédiaire d'au moins une patte de fixation supérieure 31 s'étendant depuis le bord supérieur d'au moins une ses faces latérales. Cette ou ces dernières peuvent se fixer à la face inférieure de la poutre centrale 15 ou bien à une ou des pattes de fixation 33 respectives de la poutre centrale 15, comme représenté sur la figure 3.

La partie de support est de préférence moins rigide que la poutre centrale. A cet effet, les parois de la partie de support peuvent être moins épaisses que les parois de la poutre centrale ou formées en un matériau moins rigide. De préférence la partie de support est formée en aluminium.

La partie de fixation 35 permet de maintenir en position la partie de support 27. De préférence, la partie de fixation 35 a une forme d'équerre de sorte à ce que ses faces latérales présentent chacune une forme de triangle rectangle.

La partie de fixation 35 est fixée à la traverse avant 9 par tout moyen. De préférence la partie de fixation 35 est fixée à la traverse avant 9 par l'intermédiaire d'au moins une aile supérieure 41 s'étendant depuis le bord supérieur d'au moins une de ses faces latérales de manière à former une surface plane horizontale.

Selon un mode de réalisation préféré de l'invention, la partie de fixation 35 est plus haute que la partie de support 27 et la poutre centrale 15 est plus haute que la traverse 9 avant, de sorte à ce que la partie de fixation soit en contact avec la face avant de la poutre centrale. Une telle configuration permet d'augmenter localement la surface d'appui de la face avant de la poutre centrale 15 sur la traverse avant 9. La partie de fixation 35 peut être fixée à la poutre centrale 15, cette fixation se faisant par tout moyen. De préférence, la partie de fixation 35 est fixée à la poutre centrale 15 par l'intermédiaire d'au moins une aile latérale 37 s'étendant depuis le bord arrière d'au moins une de ses faces latérales de manière à former une surface plane verticale. Ce ou ces ailes latérales 37 se fixent à la face avant de la poutre centrale ou bien à une ou des pattes de fixation 39 de la poutre centrale 15, comme représenté sur la figure 3.

Dans ce mode de réalisation, la partie de fixation 35 peut s'étendre en arrière au-delà de la traverse 9 avant de sorte à ce que la poutre centrale soit écartée de la traverse avant. De préférence et comme il est représenté, au moins une face latérale de la partie de fixation 35 présente au moins une nervure 43. Lorsque la partie de fixation a une forme rectangulaire, la ou les nervures ont de préférence une orientation verticale. Lorsque la partie de fixation a une forme d'équerre, la ou les nervures 43 présentent de préférence un angle avec l'horizontal comprise entre 30 et 60 degrés, de préférence 45 degrés.

Selon un mode de réalisation non représenté, la partie de fixation et la partie de support sont venues de matière et formées d'une seule pièce. Alternativement, les deux parties (27, 35) sont deux pièces distinctes fixées entre elles. Les deux parties (27, 35) sont fixées entre elles par tout moyen, et de préférence par l'intermédiaire d'au moins une patte de fixation. Par exemple et comme il est représenté en figure 3, la partie de support 27 peut comprendre au moins une patte de fixation 45 s'étendant depuis le bord avant d'au moins une de ses faces latérales et se fixant à au moins une aile latérale 37 de la partie de fixation 35. Une telle fixation permet à la partie de support de prendre un appui sur la partie de fixation selon la direction longitudinale du véhicule, l'aidant dans sa déformation et son absorption de l'énergie du choc arrière. En outre la partie de fixation 35 peut comprendre au moins une patte de fixation 47 fixée à la face inférieure (non visible) de la partie de support 27, de manière à rigidifier leur cohésion et éviter qu'elles ne se désolidarisent lors du choc arrière.

De préférence, la partie de fixation est elle-même en deux parties qui sont chacune une équerre et qui sont disposées symétriquement de part et d'autre de l'axe longitudinal de la poutre centrale 15.

Selon un mode de réalisation de l'invention, le dispositif de renfort de fixation 17 comprend un renfort supérieur 19 s'étendant le long au moins de la face supérieure de la poutre centrale 15 et fixé à la traverse avant 9. De préférence le renfort supérieur est fixé à la poutre centrale. Comme on peut le voir sur les figures 2 et 3, le renfort supérieur 19 peut comprendre une partie centrale 21, de préférence plane, s'étendant le long de la face supérieure de la poutre centrale 15 et en outre au moins une aile latérale 23 s'étendant le long d'une des faces latérales de la poutre centrale 15.

La fixation du renfort supérieur 19 à la traverse avant 9 peut se faire par tout moyen. De préférence sa fixation est réalisée par l'intermédiaire d'au moins une patte de fixation 25. Avantageusement la poutre centrale 15 est maintenue à l'écart de la traverse 9, comme il a été vu précédemment pour la partie de fixation 35 du renfort inférieur 49, de sorte à permettre à la ou aux pattes de fixations de s'écraser sur elles-mêmes lors d'un choc arrière sur le véhicule. Cette ou ces pattes de fixation 25 participent ainsi à l'absorption de l'énergie du choc arrière par écrasement.

De préférence encore, au moins trois pattes de fixation 25 sont présentes. Ainsi l'invention permet de mettre en place un trépied d'appui pour la poutre centrale 15. A cet effet, au moins une patte de fixation 25 est fixée à la face supérieure de la traverse avant 9 et au moins deux pattes de fixation 25 sont fixées à la face arrière de la traverse avant 9. De préférence, les au moins deux pattes de fixation 25 fixées à la face arrière de la traverse avant 9 s'étendent depuis au moins une aile latérale 23 du renfort supérieur 19.

Comme il est visible sur les figures 2 et 3, le renfort inférieur 27 est plus imposant que le renfort supérieur 19. En effet, les efforts verticaux sont plus conséquents en direction du bas que du haut. Par conséquent, le renfort inférieur 27 s'étend préférablement sur une distance en arrière plus important que le renfort supérieur 19. De préférence, la partie de support du renfort inférieur peut être déformée verticalement contrairement au renfort supérieur 19.

## Revendications

1. Véhicule (1) comprenant un châssis arrière (3) présentant deux poutres latérales (5, 7) orientées selon la direction longitudinale du véhicule (1) et reliées entre elles par au moins deux traverses (9, 11) de sorte à distinguer une traverse avant (9) et une traverse arrière (11) reliées entre elles par une poutre centrale (15) parallèle aux deux poutres latérales (5, 7), ladite poutre centrale (15) comprenant une face supérieure et une face inférieure, le véhicule (1) étant **caractérisé en ce qu'**il comprend en outre un dispositif de renfort de fixation (17) de la poutre centrale (15) comprenant un renfort inférieur(49) fixé à la traverse avant (9) et qui s'étend sur au moins une partie de la face inférieure de ladite poutre centrale (15).

2. Véhicule (1) selon la revendication 1, la poutre centrale (15) comprenant une extrémité avant et une extrémité arrière selon la direction longitudinale du véhicule (1), le véhicule (1) étant **caractérisé en ce que** le renfort inférieur (49) relie la traverse avant (9) à l'extrémité avant de la poutre centrale (15), de sorte à ce que ledit renfort inférieur (49) soit fixé à la fois à ladite traverse avant (9) et à l'extrémité avant de ladite poutre centrale (15).

3. Véhicule (1) selon l'une des revendications 1 à 2, la poutre centrale (15) comprenant une extrémité avant et une extrémité arrière selon la direction longitudinale du véhicule, le véhicule étant **caractérisé en ce que** la poutre centrale (15) est dimensionnée pour que son extrémité avant soit espacée de la traverse avant (9).

4. Véhicule (1) selon l'une des revendications 1 à 3, **caractérisé en ce que** le renfort inférieur (49) comprend un corps creux, de préférence le renfort inférieur (49) comprend un profilé en forme de U ouvert vers le haut.

5. Véhicule (1) selon la revendication 4 **caractérisé en ce que** le renfort inférieur (49) comprend deux parties (27, 35) agencées l'une à la suite de l'autre selon la direction longitudinale du véhicule, de sorte à distinguer une partie de fixation (35) à la traverse avant (9) et une partie de support (27) de la poutre centrale (15), la partie de fixation (35) à la traverse avant (9) étant disposée en avant de la partie de support de la poutre centrale (15) et **en ce que** la partie de support (27) de la poutre centrale (15) est formée par un corps creux, de préférence ledit corps creux comprend au moins un ajourage (29) sur une de ses faces.

6. Véhicule (1) selon l'une des revendications 1 à 5, la poutre centrale (15) comprenant une face avant et une face arrière, et le renfort inférieur (49) comprenant deux parties (27, 35) agencées l'une à la suite de l'autre selon la direction longitudinale du véhicule (1), de sorte à distinguer une partie de fixation (35) à la traverse avant (9) et une partie de support (27) de la poutre centrale (15), la partie de fixation (35) à la traverse étant disposée en avant de la partie de support (27) de la poutre centrale, le véhicule (1) est **caractérisé en ce que** :
- la traverse avant présente une hauteur inférieure à celle de la poutre centrale (15) ; et
- la partie de fixation (35) à la traverse avant (9) et la partie de support (27) de la poutre centrale (15) présentent des hauteurs différentes ; et **en ce que**
- la partie de fixation (35) à la traverse avant (9) est disposée de sorte à être au moins en partie en regard avec une partie de la face avant de la poutre centrale (15) ;
de préférence la partie de fixation (35) à la traverse avant (9) est plus haute que la partie de support (27) de la poutre centrale (15).

7. Véhicule (1) selon les revendications 3 et 6, la poutre centrale étant dimensionnée pour que son extrémité avant soit espacée de la traverse avant (9), le véhiculé étant **caractérisé en ce que** le renfort inférieur (49) est configuré pour que la partie de fixation (35) à la traverse avant (9) qui est disposée de sorte à être au moins en partie en regard avec une partie de la face avant de la poutre centrale (15) soit placée en contact avec ladite partie avant de la poutre centrale (15).

8. Véhicule selon l'une des revendications 5 à 7, **caractérisé en ce que** la partie de fixation (35) et la partie de support (27) sont deux pièces distinctes fixées entre elles, de préférence la partie de support (27) et la partie de fixation (35) sont fixées entre elles par l'intermédiaire d'au moins une patte de fixation (45, 47).

9. Véhicule (1) selon l'une des revendications 1 à 8, **caractérisé en ce que** le dispositif de renfort de fixation (17) comprend en outre un renfort supérieur (19) fixé à la traverse avant (9) et qui s'étend sur au moins une partie de la face supérieure de la poutre centrale (15), de préférence, le renfort supérieur (19) comprend une partie centrale (21) s'étendant le long de la face supérieure de la poutre centrale et au moins une aile (23) s'étendant le long d'une des faces latérales de la poutre centrale.

10. Dispositif de renfort de fixation (17) de poutre centrale (15) de châssis arrière (3) d'un véhicule selon l'une des revendications 1, 2 ou 4 à 9.

## Patentansprüche

1. Fahrzeug (1) mit einem hinteren Rahmen (3), der zwei in Längsrichtung des Fahrzeugs (1) ausgerichtete Seitenbalken (5, 7) aufweist, die durch mindestens zwei Querträger (9, 11) miteinander verbunden sind, um einen vorderen Querträger (9) und einen hinteren Querträger (11) zu unterscheiden, die durch einen mittigen Träger (15) parallel zu den beiden Seitenträgern (5, 7) verbunden sind 5) mit einer Oberseite und einer Unterseite, wobei das Fahrzeug (1) ferner eine Befestigungsversteifungseinrichtung (17) für den Mittelträger (15) umfasst, die eine untere Verstärkung (49) umfasst, die an der vorderen Traverse (9) befestigt ist und sich über mindestens einen Teil der Unterseite des Mittelträgers (15) erstreckt.

2. Fahrzeug (1) nach Anspruch 1, wobei der Mittelträger (15) ein vorderes und ein hinteres Ende in Längsrichtung des Fahrzeugs (1) aufweist, wobei das Fahrzeug (1) **dadurch gekennzeichnet ist, dass** die untere Verstärkung (49) die vordere Traverse (9) mit dem vorderen Ende des Mittelträgers (15) verbindet, sodass die untere Verstärkung (49) gleichzeitig an der vorderen Traverse (1) befestigt ist 9) und am vorderen Ende des Mittelträgers (15).

3. Fahrzeug (1) nach einem der Ansprüche 1 bis 2, wobei der Mittelträger (15) ein vorderes und ein hinteres Ende in Fahrzeuglängsrichtung aufweist, wobei das Fahrzeug **dadurch gekennzeichnet ist, dass** der Mittelträger (15) so bemessen ist, dass sein vorderes Ende von dem vorderen Querträger (9) beabstandet ist.

4. Fahrzeug (1) nach einem der Ansprüche 1 bis 3, **dadurch gekennzeichnet, dass** die untere Verstärkung (49) einen Hohlkörper umfasst, vorzugsweise die untere Verstärkung (49) ein nach oben offenes U-Profil umfasst.

5. Fahrzeug (1) nach Anspruch 4, **dadurch gekennzeichnet, dass** die untere Verstärkung (49) zwei Teile (27, 35) umfasst, die in Längsrichtung des Fahrzeugs aufeinander folgend angeordnet sind, um einen Befestigungsabschnitt (35) an der vorderen Traverse (9) und einen Halteabschnitt (27) des mittleren Balkens (15), den Befestigungsabschnitt (35) zu unterscheiden Der vordere Querträger (9) ist vor dem Trägerteil des Mittelträgers (15) angeordnet, und der Trägerteil (27) des Mittelträgers (15) ist von einem Hohlkörper gebildet, vorzugsweise umfasst der Hohlkörper auf einer seiner Seiten mindestens eine Durchbrechung (29).

6. Fahrzeug (1) nach einem der Ansprüche 1 bis 5, wobei der Mittelträger (15) eine Vorderseite und eine Rückseite aufweist und die untere Verstärkung (49) zwei Teile (27, 35) aufweist, die in Längsrichtung des Fahrzeugs (1) aufeinander folgend angeordnet sind, um einen Befestigungsabschnitt (35) an der Vordertraverse (9) und einen Stützabschnitt zu unterscheiden (27) des Mittelträgers (15), wobei das Befestigungsteil (35) an der Traverse vor dem Trägerteil (27) des Mittelträgers angeordnet ist, **dadurch gekennzeichnet, dass** das Fahrzeug (1)
- die vordere Querstrebe eine geringere Höhe als der mittlere Träger (15) aufweist; und
- das Befestigungsteil (35) am vorderen Querträger (9) und das Trägerteil (27) des Mittelträgers (15) weisen unterschiedliche Höhen auf; und dass
- der Befestigungsteil (35) am vorderen Querträger (9) so angeordnet ist, dass er zumindest teilweise einem Teil der Vorderseite des Mittelträgers (15) gegenüberliegt;
Vorzugsweise ist das Befestigungsteil (35) am vorderen Querträger (9) höher als das Trägerteil (27) des Mittelträgers (15).

7. Fahrzeug (1) nach den Ansprüchen 3 und 6, wobei der Mittelträger so bemessen ist, dass sein vorderes Ende von dem vorderen Querträger (9) beabstandet ist, wobei das Fahrzeug **dadurch gekennzeichnet ist, dass** die untere Verstärkung (49) so ausgebildet ist, dass der Befestigungsabschnitt (35) an dem vorderen Querträger (9), der so angeordnet ist, dass er zumindest teilweise einem Teil der vorderen Fläche des Mittelträgers (15) gegenüberliegt in Kontakt mit dem vorderen Teil des Mittelträgers (15) gebracht wird.

8. Fahrzeug nach einem der Ansprüche 5 bis 7, **dadurch gekennzeichnet, dass** das Befestigungsteil (35) und das Trägerteil (27) zwei voneinander getrennte Teile sind, vorzugsweise das Trägerteil (27) und das Befestigungsteil (35) miteinander über mindestens eine Befestigungslasche (45, 47) verbunden sind.

9. Fahrzeug (1) nach einem der Ansprüche 1 bis 8, **dadurch gekennzeichnet, dass** die Befestigungsversteifungseinrichtung (17) ferner eine obere Verstärkung (19) aufweist, die an der vorderen Querstrebe (9) befestigt ist und sich über mindestens einen Teil der Oberseite des Mittelträgers (15) erstreckt, wobei die obere Verstärkung (19) vorzugsweise einen sich entlang der Länge erstreckenden Mittelteil (21) umfasst Oberseite des Mittelträgers und mindestens ein sich entlang einer der Seitenflächen des Mittelträgers erstreckender Schenkel (23).

10. Befestigungsversteifungsvorrichtung (17) für einen Mittelträger (15) eines hinteren Fahrgestells (3) eines Fahrzeugs nach einem der Ansprüche 1, 2 oder 4 bis 9.

## Claims

1. Vehicle (1) consisting of a rear frame (3) having two side beams (5, 7) oriented in the longitudinal direction of the vehicle (1) and connected between them by at least two ties (9, 11) so as to distinguish a front beam (9) and a rear beam (11) connected between them by a central beam (15) parallel to the two side beams (5, 7), said central beam (1) 15) comprising one upper and one lower face, the vehicle (1) being **characterized in that** it also includes a fastening reinforcement device (17) of the central beam (15) including a lower reinforcement(49) attached to the front beam (9) and extending over at least part of the lower face of the central beam (15).

2. Vehicle (1) according to claim 1, the center beam (15) having a front end and a rear end according to the longitudinal direction of the vehicle (1), the vehicle (1) being **characterized by** the lower reinforcement (49) connecting the front beam (9) to the front end of the center beam (15), so that the lower reinforcement (49) is fixed at the same time at the front (9) and at the front end of the center beam (15).

3. Vehicle (1) According to one of the claims 1 to 2, the center beam (15) having a front and rear end according to the longitudinal direction of the vehicle, the vehicle being **characterized by** the center beam (15) being dimensioned so that its front end is spaced from the front beam (9).

4. Vehicle (1) according to one of the claims 1 to 3, characterized as the lower reinforcement (49) includes a hollow body, preferably the lower reinforcement (49) includes a U-shaped profile open upward.

5. Vehicle (1) according to claim 4, characterized as the lower reinforcement (49) consists of two parts (27, 35) arranged one after the other according to the longitudinal direction of the vehicle, so as to distinguish a part of attachment (35) to the front crossbrush (9) and a part of support (27) from the center girder (15), the part of attachment (1) 35) at the front beam (9) which is positioned forward of the support part of the center beam (15) and in that the support part (27) of the center beam (15) is formed by a hollow body, preferably the center body includes at least one fitting (29) on one of its faces.

6. Vehicle (1) According to one of the claims 1 to 5, the center beam (15) comprising a front face and a rear face, and the lower reinforcement (49) consisting of two parts (27, 35) arranged one after the other according to the longitudinal direction of the vehicle (1), so as to distinguish a part of fastening (35) to the front cross (9) and one part of support (27) of the center girder (15), the part of attachment (35) to the crossover being positioned forward of the part of support (27) of the center girder, the vehicle (1) is characterized as:
- the front beam has a height lower than that of the center beam (15); and
- the fastening part (35) at the front (9) and the supporting part (27) of the central beam (15) have different heights; and that
- the fastening part (35) to the front beam (9) is arranged so that it is at least partly in front of a part of the front of the center beam (15);
preferably the fastening part (35) to the front beam (9) is higher than the supporting part (27) of the center beam (15).

7. Vehicle (1) according to claims 3 and 6, the center beam being dimensioned so that its front end is separated from the front beam (9), the vehicle being **characterized in that** the lower reinforcement (49) is configured so that the attachment part (35) to the front beam (9) is arranged so that it is at least partially in relation to a part of the front of the center beam (15) be placed in contact with that front part of the central beam (15).

8. Vehicle according to one of the claims 5 to 7, characterized as the attachment part (35) and the support part (27) are two separate parts fixed between them, preferably the support part (27) and the attachment part (35) are fixed between them through at least one attachment leg (45, 47).

9. Vehicle (1) according to one of the claims 1 to 8, characterized that the attachment reinforcement device (17) also includes a top reinforcement (19) attached to the front beam (9) and that extends over at least part of the upper face of the central beam (15), preferably the top reinforcement (19) includes a center part (21) s extending along the top of the central beam and at least one wing (23) extending along one of the lateral faces of the central beam.

10. Reinforcement device (17) of center beam (15) of rear chassis (3) of a vehicle according to one of claims 1, 2 or 4 to 9.
